# EUROPÄISCHE PATENTSCHRIFT

(11) **EP 3 667 271 B1**
(45) Veröffentlichungstag und Bekanntmachung des Hinweises auf die Patenterteilung: **07.06.2023**
(21) Anmeldenummer: 19214034.1
(22) Anmeldetag: 06.12.2019
(51) Int. Cl.: G01J 1/42, G01J 1/02, G01J 1/04, G01J 1/16

(54) **AUTOMATISCHER INDOOR-OUTDOOR-LICHTSENSOR**
AUTOMATIC INDOOR OUTPUT LIGHT SENSOR
CAPTEUR DE LUMIÈRE EXTÉRIEUR INTÉRIEUR AUTOMATIQUE

(30) Priorität: 06.12.2018 DE 102018009603; 28.02.2019 DE 102019105173
(43) Veröffentlichungstag der Anmeldung: 17.06.2020
(73) Patentinhaber: Siteco GmbH, 83301 Traunreut (DE)
(72) Erfinder: Bornemann, Lars, 83254 Breitbrunn (DE); König, Christian, 84558 Kirchweidach (DE)
(74) Vertreter: Schmidt, Steffen

(56) Entgegenhaltungen:
- WO-A1-2014/060901
- WO-A1-2015/028462
- DE-A1- 10 338 060

## Beschreibung

Die vorliegende Erfindung betrifft ein Sensorelement für eine Beleuchtungsanlage, insbesondere für eine Beleuchtungsanlage im Inneren eines Gebäudes, die aus einer Vielzahl von vernetzten Leuchten und ggf. weiterer Gebäudeinstallationseinrichtungen gebildet ist.

Im Stand der Technik ist es üblich, in komplexen Beleuchtungsanlagen auch Sensoren vorzusehen, die insbesondere Helligkeitswerte aufnehmen. Die Sensordaten werden zur Steuerung der Anlage verwendet. Die Beleuchtungsanlage kann insbesondere ausgeschaltet oder gedimmt werden, wenn genügend Tageslicht festgestellt wird.

Die Erfassung der Lichtwerte zur Steuerung der Anlage hängt jedoch davon ab, ob Tageslicht, künstliches Licht oder eine Kombination von beidem gemessen werden soll. Während Tageslicht als Streulicht vorliegt, hat künstliches Licht häufig eine nahezu punktförmige Lichtquelle. Die Messung der Lichtintensität kann daher auch nicht ohne Weiteres für Kunst- und Tageslicht in der gleichen Weise erfolgen. Es sind, abhängig vom Anwendungszweck, unterschiedliche Sensortypen erforderlich, die sich im mechanischen Aufbau und/oder in ihrer elektrischen Betriebsweise unterscheiden.

WO 2014/060901 A1 offenbart ein Sensorelement gemäß dem Oberbegriff des Anspruchs 1. Ferner beschreibt die DE 103 38 060 A1 ein Sensorelement eines Fahrzeugs mit zwei Helligkeitssensoren mit unterschiedlichem Öffnungswinkel des Erfassungsbereichs. WO 2015/028462 A1 beschreibt ein Sensorelement eines tragbaren Endgeräts, welches wenigstens zwei Lichtsensoren mit unterschiedlichen Erfassungsbereichen aufweist. Weiterhin wird ein Lagesensor und die unterschiedliche Gewichtung der Sensorsignale in Abhängikeit vom Lagesignal offenbart.

Aufgabe der vorliegenden Erfindung ist es, ein Sensorelement für eine Beleuchtungsanlage bereitzustellen, welches in einem vernetzten Netzwerk multifunktional eingesetzt werden kann. Gelöst wird die Aufgabe durch ein Sensorelement nach Anspruch 1.

Eine Besonderheit des Sensorelements der vorliegenden Erfindung ist die Kombination von zwei verschiedenen Lichtsensoren, die jeweils unterschiedliche Öffnungswinkel aufweisen. Dadurch ist es möglich, sowohl Kunstlicht als auch Tageslicht und eine Kombination davon zu messen. Der Lichtsensor mit dem größeren Öffnungswinkel ist für Tageslicht geeignet, weil Tageslicht aus Streulicht gebildet ist. Für Kunstlicht ist hingegen ein Lichtsensor mit einem engeren Öffnungswinkel bevorzugt, um die Beleuchtungsstärke einer definierten Fläche zu erfassen. Ein Versuch, auch Kunstlicht mit einem Lichtsensor mit großem Öffnungswinkel zu erfassen, kann zu Fehlmessungen führen, insbesondere weil nahezu punktförmige Lichtquellen in dem Erfassungsbereich des Lichtsensor zu einer Fehlinterpretation führen können. Daher ist es für Kunstlicht von Vorteil, nur das Licht aus einem engen definierten Raumwinkel zu erfassen. Demgegenüber soll die Lichtmessung für Tageslicht einen großen Raumwinkel umfassen, um feststellen zu können, ob genügend Tageslicht in Form von Streulicht vorhanden ist, so dass eine künstliche Beleuchtung reduziert oder ausgeschaltet werden kann.

Gemäß einer bevorzugten Ausführungsform weisen die zwei Lichtsensoren ferner unterschiedliche minimale und maximale Empfindlichkeiten auf. Zur Erfassung von Kunstlicht wird eine höhere Empfindlichkeit benötigt. Der gleiche Sensor wäre zur Erfassung von Tageslicht bereits ungeeignet, weil der für die empfindlichere Messung ausgestaltete Lichtsensor bereits übersteuert wird, wenn ein Tageslichtanteil von dem Sensor erfasst wird.

Gemäß einer weiteren bevorzugten Ausführungsform weisen die zwei Lichtsensoren unterschiedliche Optiken, insbesondere unterschiedliche Linsen und/oder Reflektoren, auf. Mit den unterschiedlichen Optiken lassen sich z.B. die unterschiedlichen Öffnungswinkel des Erfassungsbereichs der Lichtsensoren realisieren.

Gemäß einer weiteren bevorzugten Ausführungsform weisen die zwei Lichtsensoren unterschiedliche Diffusorplatten oder nur eine der beiden Lichtsensoren, insbesondere der Lichtsensor mit dem größeren Öffnungswinkel, eine Diffusorplatte auf. Eine Diffusorplatte vergrößert den Erfassungsbereich eines Lichtsensors. Daher ist für den Lichtsensor mit dem größeren Öffnungswinkel eine Diffusorplatte bevorzugt. An dem Lichtsensor mit dem engeren Öffnungswinkel ist entweder keine Diffusorplatte oder eine Diffusorplatte, welche für eine geringere Diffusion sorgt, vorgesehen.

Erfindungsgemäß umfasst das Sensorelement einen Lagesensor, der dafür eingerichtet ist, die Einbaulage des Sensorelements zu bestimmen. Aus der Einbaulage lässt sich ermitteln, für welche Art von Licht (Kunstlicht oder Tageslicht) die Lichtsensoren vorgesehen werden sollen. Das Sensorelement ist dafür eingerichtet, den Lichtsensor mit dem geringeren Öffnungswinkel zu deaktivieren, wenn der Lagesensor eine Einbaulage feststellt, in welcher der Erfassungsbereiche beider Sensoren in eine Richtung entgegen der Erdoberfläche ausgerichtet sind. Da der Erfassungsbereich eines Lichtsensors entgegen der Erdoberfläche ausgereichtet ist, ist das Sensorelement insbesondere für die Tageslichtmessung vorgesehen. In diesem Fall kann der Lichtsensor, welcher für die Kunstlichtmessung bestimmt ist, aber auch entgegen der Erdoberfläche ausgerichtet ist, abgeschaltet werden.

Gemäß einer weiteren bevorzugten Ausführungsform weist das Sensorelement eine Schnittstelle auf, durch welche wenigstens einer der beiden Lichtsensoren deaktivierbar ist.

Beispielsweise lässt sich die Schnittstelle über ein Datensignal ansteuern, welches auch zur Ansteuerung der vernetzten Beleuchtungsanlage vorgesehen ist. Das Sensorelement kann auf diese Weise zusammen mit der Beleuchtungsanlage parametriert werden, indem nur der für den Einbauort gewünschte Lichtsensor aktiviert ist. Ferner können auch beide Lichtsensoren deaktivierbar sein, um beispielsweise tageszeitabhängig nur den einen oder den anderen Sensor zu betreiben.

Gemäß einer weiteren bevorzugten Ausführungsform weist einer der Lichtsensoren einen Öffnungswinkel von höchstes 90°, vorzugsweise höchstens 60°, und der andere Lichtsensor einen Öffnungswinkel von wenigstens 110°, jeweils gemessen als Winkel der Spitze einer Kegelmantelkurve, die den Erfassungsbereich des Lichtsensors definiert, auf.

Gemäß einer weiteren bevorzugten Ausführungsform weist ein Sensorelement ferner einen Personendetektor auf. Der Personendetektor kann ständig aktiv sein oder das Sensorelement kann in einer Betriebsart dazu eingerichtet sein, den Bewegungssensor nur zu aktivieren, wenn der Lichtsensor mit dem größeren Öffnungswinkel eine Beleuchtungsstärke unterhalb eines gegebenen Grenzwertes misst. Der Personendetektor dient in der Beleuchtungsanlage häufig zum Steuern des Kunstlichts. Dies ist jedoch nur notwendig, wenn nicht genügend Tageslicht vorhanden ist. Daher ist die Kombination eines Personendetektors zusammen mit den Lichtsensoren in dem Sensorelement von Vorteil, weil der Personendetektor nur aktiviert werden muss, wenn nicht genügend Tageslicht erfasst wird.

Weitere Vorteile und Merkmale der vorliegenden Erfindung werden aus der nachfolgenden Beschreibung deutlich, die in Verbindung mit den beigefügten Figuren gegeben wird. In den Figuren ist Folgendes dargestellt:
- Figur 1: zeigt schematisch ein Sensorelement gemäß der vorliegenden Erfindung.
- Figur 2: zeigt das Sensorelement nach Figur 1 in einer anderen Einbaulage.

Ein Sensorelement der vorliegenden Erfindung ist zur Verwendung in einer vernetzten Beleuchtungsanlage eingerichtet. Insbesondere kann das Sensorelement in einem Light Management System (LMS) oder einem Building Management System (BMS) eines Gebäudes oder im Außenbereich des Gebäudes Anwendung finden. Das Sensorelement ist insbesondere dafür eingerichtet, in die Datenkommunikation innerhalb des vernetzten Licht- oder Gebäude-Management-Systems eingebunden zu werden.

Das Sensorelement umfasst zwei verschiedene Lichtsensoren in einem System, die sich in Bezug auf ihren Öffnungswinkel unterscheiden. In den Figuren ist ein solcher Sensor dargestellt, der zwei verschiedene Optiken in Form von Linsen aufweist, deren Krümmungsradius sich unterscheidet, so dass sie effektiv einen unterschiedlichen Öffnungswinkel erfassen. Das in den Figuren dargestellte Sensorelement 1 umfasst einen Lichtsensor 2 mit einer stärker gekrümmten Optik. Diese Optik sorgt für einen verhältnismäßig engen Öffnungswinkel, aus dem Licht empfangen wird. Beispielsweise kann der Öffnungswinkel weniger als 90° betragen. Ferner ist am gleichen Sensorelement 1 ein weiterer Lichtsensor 3 vorgesehen, welcher eine weniger stark gekrümmte Optik aufweist. Dieser Lichtsensor empfängt Licht aus einem Öffnungswinkel von z.B. mehr als 110°.

Beide Lichtsensoren 2 und 3 sind im gleichen Sensorelement 1 integriert. Auf diese Weise lässt sich das Sensorelement 1 gewissermaßen multifunktional in dem vernetzten Beleuchtungssystem einsetzen. Das gleiche Sensorelement kann sowohl an Orten eingesetzt werden, die nur dafür bestimmt sind, Kunstlicht zu messen, als auch an Orten, die dafür bestimmt sind, Kunst- und Tageslicht, insbesondere eine Kombination davon, zu messen. Dies kann in Innenräumen eines Gebäudes oder in einem Außenbereich, z.B. einer Straße mit Straßenbeleuchtung, sein.

Der Lichtsensor 2 mit Blickrichtung nach unten ist speziell dafür konfiguriert, Kunstlicht und ggf. einen Anteil von reflektiertem Tageslicht zu erfassen, während der Lichtsensor 3 dafür bestimmt ist, Tageslicht zu messen. Ferner unterscheiden sich die Lichtsensoren 2 und 3 durch ihre minimale und maximale Empfindlichkeit sowie durch die Verwendung von Diffusorplatten. Der für Kunstlicht vorgesehene Lichtsensor 2 weist eine geringere minimale Empfindlichkeit auf, während der Lichtsensor 3 für Tageslicht eine höhere maximale Empfindlichkeit aufweist. Der Tageslichtsensor ist vorzugsweise mit einer Diffusorplatte (in den Figuren nicht dargestellt) versehen, um eine gleichmäßige Verteilung des Tageslichts auf dem Messsensor zu gewährleisten.

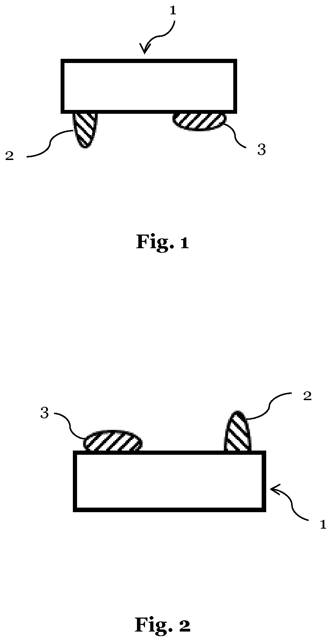

Ferner verfügt das Sensorelement 1 über einen Lagesensor (in den Figuren nicht dargestellt), welcher die Einbaulage des Sensorelements bestimmt. Für Messungen des Tageslichts, z.B. in einer Lichtkuppel, wird das Sensorelement so gedreht, dass die Erfassungsbereiche der Lichtsensoren um 180° entgegen der Erdoberfläche gedreht sind (siehe Figur 2). Auf der nach oben weisenden Seite ist der Tageslichtsensor inklusive einer Diffusorscheibe verbaut und wird durch die gemessene Einbauposition automatisch aktiviert. Der zweite für Kunstlicht vorgesehene Lichtsensor 2 wird dabei deaktiviert.

Durch die Kombination der zwei Lichtsensoren in einem Sensorelement kann vor Ort entschieden werden, welche Art von Lichtmessung durchgeführt werden soll. Durch die Montageart kann das Sensorelement so verwendet werden, dass beide Sensoren frei verbaut sind, so dass auch manuelles Verdrehen des Sensorelements der gewünschte Lichtsensor aktivierbar ist.

### BEZUGSZEICHENLISTE

- 1: Sensorelement
- 2: Lichtsensor
- 3: Lichtsensor

## Patentansprüche

1. Sensorelement (1) zum Anschließen in einer vernetzten Beleuchtungsanlage, umfassend
zwei verschiedene Lichtsensoren (2, 3), die unterschiedliche Öffnungswinkel eines Erfassungsbereichs zur Lichtdetektion aufweisen; **dadurch gekennzeichnet,**
**dass** das Sensorelement einen Lagesensor aufweist, der dafür eingerichtet ist, die Einbaulage des Sensorelements (1) zu bestimmen, und
das Sensorelement (1) dafür eingerichtet ist, den Lichtsensor (2) mit dem geringeren Öffnungswinkel zu deaktivieren, wenn der Lagesensor eine Einbaulage feststellt, in welcher die Erfassungsbereiche beider Lichtsensoren (2, 3) in eine Richtung entgegen der Erdoberfläche ausgerichtet sind.

2. Sensorelement (1) nach Anspruch 1, wobei die zwei Lichtsensoren (2, 3) unterschiedliche minimale und maximale Empfindlichkeiten aufweisen.

3. Sensorelement (1) nach einem der vorhergehenden Ansprüche, wobei die zwei Lichtsensoren (2, 3) unterschiedliche Optiken, insbesondere unterschiedliche Linsen und/oder Reflektoren, aufweisen.

4. Sensorelement (1) nach einem der vorhergehenden Ansprüche, wobei die zwei Lichtsensoren (2, 3) unterschiedliche Diffusorplatten oder nur eine der beiden Lichtsensoren, insbesondere der Lichtsensor mit dem größeren Öffnungswinkel, eine Diffusorplatte aufweist.

5. Sensorelement (1) nach einem der vorhergehenden Ansprüche, wobei das Sensorelement eine Schnittstelle aufweist, durch welche wenigstens einer der beiden Lichtsensoren (2, 3) deaktivierbar ist.

6. Sensorelement (1) nach einem der vorhergehenden Ansprüche, wobei einer der Lichtsensoren (2) einen Öffnungswinkel von höchstens 90° und der andere Lichtsensor (3) einen Öffnungswinkel von wenigstens 110°, jeweils gemessen als Winkel der Spitze einer Kegelmantelkurve, die den Erfassungsbereich des Lichtsensors definiert, aufweist.

7. Sensorelement (1) nach einem der vorhergehenden Ansprüche, welches ferner einen Personendetektor aufweist.

8. Sensorelement nach Anspruch 7, wobei das Sensorelement in einer Betriebsart dazu eingerichtet ist, den Personendetektor nur zu aktivieren, wenn der Lichtsensor (3) mit dem größeren Öffnungswinkel eine Beleuchtungsstärke unterhalb eines gegebenen Grenzwertes misst.

## Claims

1. Sensor element (1) for connection in a networked lighting system, comprising
two different light sensors (2, 3) which have different opening angles of a detection region for light detection; **characterised in that**
the sensor element has a position sensor which is configured to determine the installation position of the sensor element (1), and
the sensor element (1) is configured to deactivate the light sensor (2) with the smaller opening angle when the position sensor detects an installation position in which the detection regions of both light sensors (2, 3) are oriented in a direction counter to the earth's surface.

2. Sensor element (1) according to claim 1, wherein the two light sensors (2, 3) have different minimum and maximum sensitivities.

3. Sensor element (1) according to one of the preceding claims, wherein the two light sensors (2, 3) have different optical systems, in particular different lenses and/or reflectors.

4. Sensor element (1) according to one of the preceding claims, wherein the two light sensors (2, 3) have different diffuser plates or only one of the two light sensors, in particular the light sensor with the larger opening angle, has a diffuser plate.

5. Sensor element (1) according to one of the preceding claims, wherein the sensor element has an interface by which at least one of the two light sensors (2, 3) can be deactivated.

6. Sensor element (1) according to one of the preceding claims, wherein one of the light sensors (2) has an opening angle of at most 90° and the other light sensor (3) has an opening angle of at least 110°, in each case measured as the angle of the tip of a conical surface curve which defines the detection region of the light sensor.

7. Sensor element (1) according to one of the preceding claims, which furthermore has a person detector.

8. Sensor element according to claim 7, wherein the sensor element is configured in an operating mode to activate the person detector only when the light sensor (3) with the larger opening angle measures an illuminance below a given limit value.

## Revendications

1. Élément de capteur (1) destiné à être raccordé à une installation d'éclairage en réseau, comprenant
deux capteurs photoélectriques (2, 3) différents, qui présentent des angles d'ouverture différents d'une zone de mesure pour la détection de la lumière ; **caractérisé en ce que**
l'élément de capteur comprend un capteur de positon qui est conçu pour déterminer la position d'installation de l'élément de capteur (1) et
l'élément de capteur (1) est conçu pour désactiver le capteur photoélectrique (2) avec l'angle d'ouverture le plus faible lorsque le capteur de position détecte une position d'installation dans lesquelles les zones de mesure des deux capteurs photoélectriques (2, 3) sont orientées dans une direction à l'encontre de la surface de la terre.

2. Élément de capteur (1) selon la revendication 1, dans lequel les deux capteurs photoélectriques (2, 3) comprennent des sensibilités minimale et maximale différentes.

3. Élément de capteur (1) selon l'une des revendications précédentes, dans lequel les deux capteurs photoélectriques (2, 3) comprennent des optiques différentes, plus particulièrement des lentilles et/ou des réflecteurs différents.

4. Élément de capteur (1) selon l'une des revendications précédentes, dans lequel les deux capteurs photoélectriques (2, 3) comprennent des plaques de diffusion différentes ou seul un des deux capteurs photoélectriques, plus particulièrement le capteur photoélectrique avec l'angle d'ouverture le plus grand, comprend une plaque de diffusion.

5. Élément de capteur (1) selon l'une des revendications précédentes, dans lequel l'élément de capteur comprend une interface grâce à laquelle au moins un des deux capteurs photoélectriques (2, 3) peut être désactivé.

6. Élément de capteur (1) selon l'une des revendications précédentes, dans lequel un des capteurs photoélectriques (2) présente un angle d'ouverture de 90° maximum et l'autre capteur photoélectrique (3) présente un angle d'ouverture de 110° minimum, respectivement mesurés comme l'angle de l'a pointe d'une courbe d'enveloppe conique qui définit la zone de mesure du capteur photoélectrique.

7. Élément de capteur (1) selon l'une des revendications précédentes, qui comprend en outre un détecteur de personnes.

8. Élément de capteur (1) selon la revendication 7, dans lequel l'élément de capteur est conçu, dans un mode de fonctionnement, pour activer le détecteur de personnes uniquement lorsque le capteur photoélectrique (3) avec l'angle d'ouverture le plus grand mesure une intensité d'éclairage en dessous d'un valeur limite donnée.
